# EUROPEAN PATENT SPECIFICATION

(11) **EP 1 721 667 B1**
(45) Date of publication and mention of the grant of the patent: **06.10.2010**
(21) Application number: 06009257.4
(22) Date of filing: 04.05.2006
(51) Int. Cl.: B01L 3/00

(54) **Device for printing biomolecules on substrate using electrohydrodynamic effect**
Vorrichtung zum Drucken von Biomolekülen auf ein Substrat unter Ausnutzung vom elektrohydrodynamischen Effekt
Dispositif pou inprimer des biomolecules sur un substrat au moyen d'un effet electrohydrodynamique

(30) Priority: 13.05.2005 KR 20050040162
(43) Date of publication of application: 15.11.2006
(73) Proprietor: SAMSUNG ELECTRONICS CO., LTD., Suwon-si, Gyeonggi-do (KR)
(72) Inventor: Lee, Jeong-gun, Seocho-gu Seoul (KR); Choi, Jeong-woo, Ilsan-gu Goyang-si Gyeonggi-do (KR); Huh, Nam, Seocho-gu Seoul (KR); Cho, Hye-jung, Anyang-si Gyeonggi-do (KR)
(74) Representative: Grünecker, Kinkeldey, Stockmair & Schwanhäusser Anwaltssozietät

(56) References cited:
- WO-A-01/15800
- US-A1- 2004 136 876
- LIN Y-C ET AL: "Experimental investigation of a microfluidic driving system for bi-directional manipulation" SENSORS AND ACTUATORS A, ELSEVIER SEQUOIA S.A., LAUSANNE, CH, vol. 112, no. 1, 15 April 2004 (2004-04-15), pages 142-147, XP004504738 ISSN: 0924-4247

### Sequence listing

<110> Samsung Electronics Co., Ltd.
<120> Device for printing biomolecule on substrate using electrohydrodynamic effect
<130> EP42164FZ091
<140> not yet assigned
   <141> herewith
<150> KR 10-2005-0040162
   <151> 2005-05-13
<160> 7
<170> KopatentIn 1.71
<210> 1
   <211> 26
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 1
   tcaataccga aagaacttta caaccc 26
<210> 2
   <211> 25
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 2
   aggaaggcgd traggttaat aacct 25
<210> 3
   <211> 27
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 3
   agtttgactg taccattttg aataagt 27
<210> 4
   <211> 25
   <212> DNA
   <213> Artificial sequence
<220>
   <223> probe polynucleotide
<220>
   <221> misc_feature
   <222> (1)
   <223> aminohexylation (NH2(CH2)6-) at base of the 5' terminal nucleotide
<400> 4
   aacatatgtg taagtaactg tgcac 25
<210> 5
   <211> 25
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 5
   gtgtgagagt ggaaagttca cactg 25
<210> 6
   <211> 18
   <212> DNA
   <213> Artificial sequence
<220>
   <223> primer
<220>
   <221> misc_feature
   <222> (1)
   <223> Cy3 is attached at the 5' terminal nucleotide
<400> 6
   ccakactcct acgggagg 18
<210> 7
   <211> 22
   <212> DNA
   <213> Artificial sequence
<220>
   <223> primer
<220>
   <221> misc_feature
   <222> (1)
   <223> Cy3 is attached at the 5' terminal nucleotide
<400> 7
   gtattaccgc rrctgctggc ac 22

### Sequence listing

<110> Samsung Electronics Co., Ltd.
<120> Device for printing biomolecule on substrate using electrohydrodynamic effect
<130> EP42164FZ091
<140> not yet assigned
   <141> herewith
<150> KR 10-2005-0040162
   <151> 2005-05-13
<160> 7
<170> KopatentIn 1.71
<210> 1
   <211> 26
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 1
   tcaataccga aagaacttta caaccc 26
<210> 2
   <211> 25
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 2
   aggaaggcgd traggttaat aacct 25
<210> 3
   <211> 27
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 3
   agtttgactg taccattttg aataagt 27
<210> 4
   <211> 25
   <212> DNA
   <213> Artificial sequence
<220>
   <223> probe polynucleotide
<220>
   <221> misc_feature
   <222> (1)
   <223> aminohexylation (NH2(CH2)6-) at base of the 5' terminal nucleotide
<400> 4
   aacatatgtg taagtaactg tgcac 25
<210> 5
   <211> 25
   <212> DNA
   <213> Artificial Sequence
<220>
   <223> probe polynucleotide
<220>
   <221> misc_feature
   <222> (1)
   <223> aminohexylation (NH2(CH2)6-) at base of the 5' terminal nucleotide
<400> 5
   gtgtgagagt ggaaagttca cactg 25
<210> 6
   <211> 18
   <212> DNA
   <213> Artificial sequence
<220>
   <223> primer
<220>
   <221> misc_feature
   <222> (1)
   <223> Cy3 is attached at the 5' terminal nucleotide
<400> 6
   ccakactcct acgggagg 18
<210> 7
   <211> 22
   <212> DNA
   <213> Artificial sequence
<220>
   <223> primer
<220>
   <221> misc_feature
   <222> (1)
   <223> Cy3 is attached at the 5' terminal nucleotide
<400> 7
   gtattaccgc rrctgctggc ac 22

## Description

### BACKGROUND OF THE INVENTION

### 1. Field of the Invention

The present invention relates to a device for printing biomolecules on a substrate using an electrohydrodynamic (EHD) effect, and more particularly, to a device for printing biomolecules on a substrate using an EHD effect by dropping a solution of biomolecules such as nucleic acids (e.g., probe DNA, RNA, and peptide nucleic acid (PNA)), proteins (e.g., antigen and antibody), and oligopeptides, onto a solid substrate surface and fixing the biomolecules onto the substrate to manufacture a biochip or a DNA microarray.

### 2. Description of the Related Art

As a result of the epoch-making development of the Human Genome Project, there is an increasing need for methods of rapidly providing a large amount of genetic information for the diagnosis, treatment, and prevention of genetic disorders.

Although the Sanger method for analyzing nucleotide sequences has been constantly developed through the development and automation of a polymerase chain reaction (PCR) method, in which DNAs are duplicated, the Sanger method is complex to perform and much time, labor, expense, and expertise are required to perform the method. Thus, a large number of genes cannot be analyzed using the Sanger method. As a result, new systems for analyzing nucleotide sequences are continuously being researched, and in the last several years, there have been advances in many fields relating to the manufacture and application of biochips or DNA microarrays.

A biochip or DNA microarray refers to a chip manufactured by microarraying oligonucleotide probes, each probe having a known sequence of up to hundreds of nucleotides, in hundreds to hundreds of thousands of predetermined positions on a solid surface made of, for example, silicon, surface-modified glass, polypropylene, or activated polyacrylamide. If a fragment of target DNA to be analyzed is applied to the biochip or DNA microarray, the target DNA complementarily hybridizes with the oligonucleotide probes immobilized on the biochip or DNA microarray. The hybridization is optically or radiochemically detected and analyzed to identify the nucleotide sequence of the target DNA, which is called sequencing by hybridization (SBH).

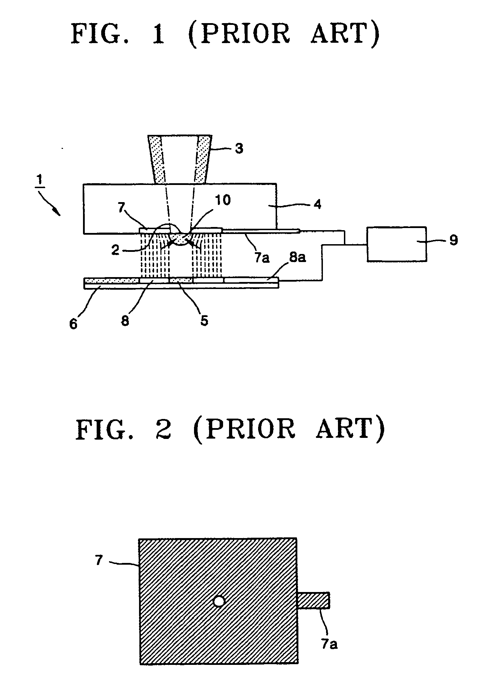

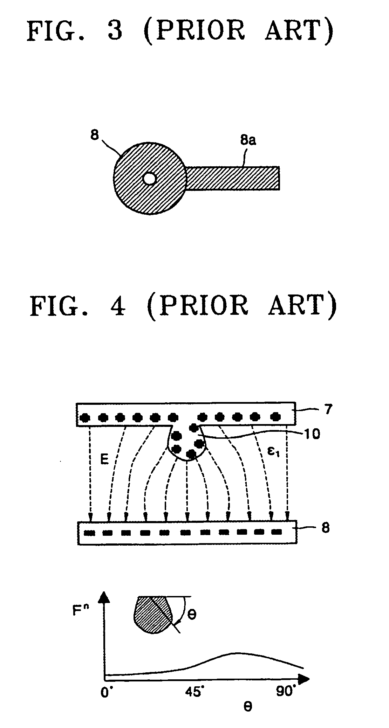

An example of a printing device for manufacturing a biochip or a DNA microarray is disclosed in Korean Patent Laid-Open Publication No. 2004-0,000,882. As illustrated in FIG. 1, a printing device 1 includes a capillary 3 through which a biomolecule solution 10 is discharged, a printer body 4 which supports the capillary 3, a target surface 5 onto which the biomolecule solution 10 is deposited, a substrate 6 disposed below an outlet 2 of the capillary 3, a first electric field forming electrode 7 disposed on the printer body 4 around the circumference of the outlet 2, and a second electric field forming electrode 8 separated from the first electric field forming electrode 7. The biomolecule solution 10 includes nucleic acids (such as probe DNA, RNA, PNA, and LNA), proteins (such as antigens and antibodies), and oligopeptides. The first and second electric field forming electrodes 7 and 8 are connected to a voltage applying unit 9 via first and second electrode lead wires 7a and 8a, respectively. The first electric field forming electrode 7 may be rectangular, as illustrated in FIG. 2, or may be circular as illustrated in FIG. 3.

In the printing device 1 constructed as described above, an electric field is generated between the first and second electric field forming electrodes 7 and 8, as illustrated in FIGS. 1 and 4, when AC and DC voltages are simultaneously applied between the first and second electric field forming electrodes 7 and 8 by driving the voltage applying unit 9. An electric force is created in a direction indicated by arrows in FIG. 1, toward the biomolecule solution 10, due to interactions among the electric field generated as described above, the biomolecule solution 10 having a free surface, and a dielectric constant gradient of the atmosphere. Accordingly, a droplet of the biomolecule solution 10 suspended in the outlet 2 of the capillary 3 drops onto the target surface 5 of the substrate 6.

However, when the biomolecule solution 10 is printed using the printing device 1 described above, the droplet of the biomolecule solution 10 suspended in the outlet 2 spreads to outside the printer body 4. In particular, the diameter of the droplet of the biomolecule solution 10 that is printed on the substrate 6 is much greater than that of the outlet 2. Thus, there is a limit to manufacturing highly dense biochips by printing a plurality of same-sized biomolecule solutions 10 on the substrate 6.

In addition, the first electrode lead wire 7a is disposed in the same plane as the first electric field forming electrode 7. Thus, the electric field formed between the first electrode lead wire 7a and the second electric field forming electrode 8 and the electric field formed between the first and second electrode lead wires 7a and 8a interferes with the electrohydrodynamic (EHD) effect generated in the biomolecule solution 10 and there is a limit to have a plurality of first electric field forming electrodes 7.

US 2004/0136876 A1 relates to a device for injecting and mixing liquid droplets, said device comprising an electrically insulating analysis support, an injector designed to form an orifice outlet and two electrodes and a means for controlling a voltage applied between the two electrodes. The first electrode is arranged under an electrically insulating layer of the analysis support and the second electrode is arranged near to the outlet orifice of the injector.

### SUMMARY OF THE INVENTION

The present invention provides a device for printing biomolecules on a substrate using an electrohydrodynamic (EHD) effect which enables the manufacturing of a high density biochip by depositing droplets of a biomolecule solution with small size and volume onto a substrate and printing numerous biomolecule solutions on a substrate.

According to an aspect of the present invention, there is provided a device for printing a biomolecule solution onto a substrate using an electrohydrodynamic effect. The device includes: a first electric field forming electrode that is shaped like a needle, is made of a conductive material, is disposed vertically, and comprises: an accommodating area in which the biomolecule solution is accommodated; and an outlet formed on a bottom end of the accommodating area through which the biomolecule solution is discharged; a substrate disposed below the first electric field forming electrode, and including a target surface onto which the biomolecule solution discharged from the outlet of the first electric field forming electrode is deposited; a second electric field forming electrode made of a conductive material and disposed below the first electric field forming electrode; and a voltage applying device which is electrically connected to the first and second electric field forming electrodes to apply a voltage between the first and second electric field forming electrodes so that an electric field is generated around the biomolecule solution suspended in the outlet,
wherein, due to the interaction between the electric field and a difference between dielectric constants of the biomolecule solution having a free surface and the surrounding atmosphere, the electric force acts inward on the biomolecule solution, thereby causing a predetermined amount of the biomolecule solution to drop onto the target surface of the substrate, wherein the second electric field forming electrode is a ring-shaped electrode disposed on top of the substrate and encompass the circumference of the target surface of the substrate.

The device may further include a printer body that is disposed above the outlet of the first electric field forming electrode, and supports the first electric field forming electrode.

The first electric field forming electrode and the voltage applying device may be electrically connected to each other via an electrode lead wire connected to a top end of the first electric field forming electrode.

The voltage applying device may simultaneously apply AC and DC voltages to generate the electric field around the biomolecule solution suspended in the outlet.

The DC voltage in the range of 500 to 10,000 V and the AC voltage in the range of 500 to 10,000 V may be simultaneously applied between the first and second electric field forming electrodes.

The AC voltage having a frequency of 10 to 1,000 Hz may be applied between the first and second electric field forming electrodes.

The DC voltage of 1,550 V and the AC voltage of 500 V at a frequency of 100 Hz may be applied.

The substrate may be made of silicon, glass, or polymer.

The substrate may include: a planar layer; and a plurality of protrusions protruding upwards from the planar layer. Each of the protrusions may be a target surface of the substrate.

The second electric field forming electrode is a ring-shaped electrode disposed on top of the substrate and encompass the circumference of the target surface of the substrate.

The second electric field forming electrode may be disposed roughly perpendicular to the first electric field forming electrode.

Both the first and second electric field forming electrodes may be made of gold.

The area around the outlet may be hydrophobic-treated.

The device may include: a plurality of the first electric field forming electrodes arranged with the same pitch, and a plurality of the target surfaces formed on the substrate. Target surfaces may have the same pitch as the first electric field forming electrodes to respectively correspond to the first electric field forming electrodes

### BRIEF DESCRIPTION OF THE DRAWINGS

The above and other features and advantages of the present invention will become more apparent by describing in detail exemplary embodiments thereof with reference to the attached drawings in which:
FIG. 1 is a cross-sectional view of a conventional printing device for printing a biomolecule solution onto a substrate using an electrohydrodynamic (EHD) effect;
FIG. 2 is a plan view of a first electric field forming electrode illustrated in FIG. 1;
FIG. 3 is a plan view of a second electric field forming electrode illustrated in FIG. 1;
FIG. 4 is a view illustrating an electric field generated when voltage is applied to the printing device illustrated in FIG. 1;
FIG. 5 is a cross-sectional view of a device for printing a biomolecule solution onto a substrate using an EHD effect according to an embodiment of the present invention;
FIG. 6 is a plan view of the substrate illustrated in FIG. 5;
FIG. 7 is a view illustrating an electric field generated when voltage is applied to the device illustrated in FIG. 5;
FIGS. 8 through 11 are diagrams illustrating the process of printing the biomolecule solution using the device illustrated in FIG. 5;
FIGS. 12 through 15 are photographs illustrating the process of printing the biomolecule solution onto a silicon substrate using the device illustrated in FIG. 5;
FIG. 16 is a cross-sectional view of a device for printing a biomolecule solution onto a substrate using an EHD effect according to another embodiment of the present invention;
FIG. 17 is a cross-sectional view of a device for printing a biomolecule solution onto a substrate using an EHD effect according to another embodiment of the present invention;
FIG. 18 is a schematic view illustrating continuously printing the biomolecule solution onto the substrate using the device illustrated in FIG. 17; and
FIG. 19 is a photograph of the result of detecting pathogenic bacteria cells using a microarray manufactured using the device illustrated in FIG. 5.

### DETAILED DESCRIPTION OF THE INVENTION

The present invention will now be described more fully with reference to the accompanying drawings, in which exemplary embodiments of the invention are shown.

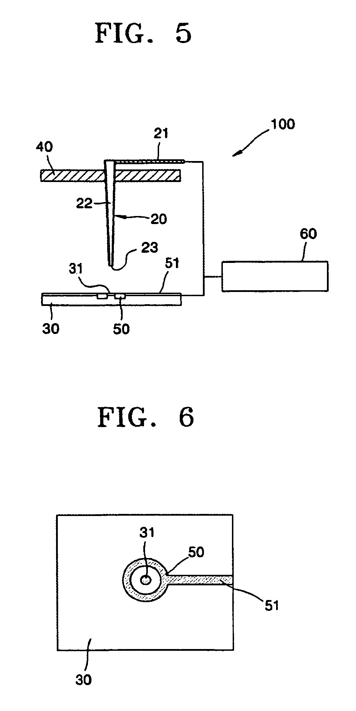

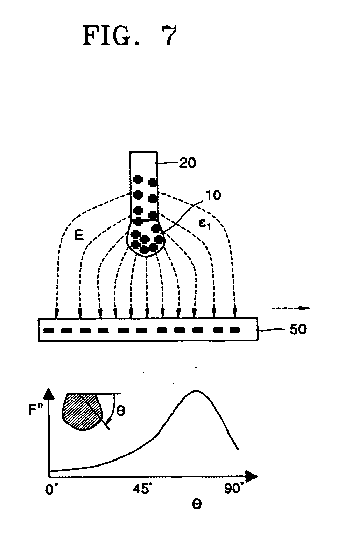

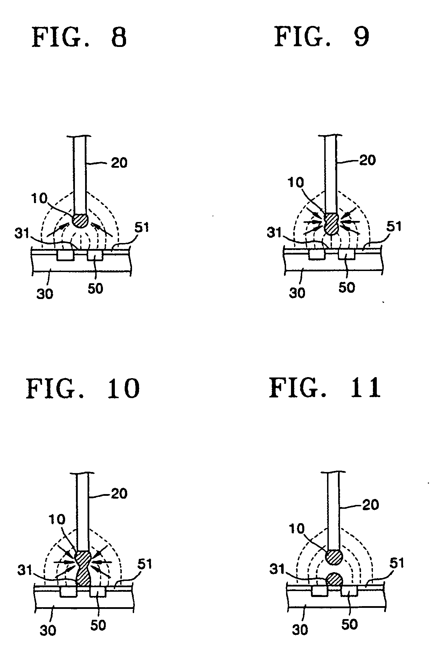

FIG. 5 is a cross-sectional view of a device 100 for printing a biomolecule solution 10 onto a substrate 30 using an electrohydrodynamic (EHD) effect according to an embodiment of the present invention, and FIG. 6 is a plan view of the substrate 30 in FIG. 5. FIG. 7 is a view illustrating an electric field generated when voltage is applied to the device 100, and FIGS. 8 through 11 are diagrams illustrating the process of printing the biomolecule solution 10 using the device 100.

Referring to FIGS. 5 through 11, the device 100 includes a first electric field forming electrode 20, the substrate 30, a printer body, a second electric field forming electrode 50, and a voltage applying device 60.

The first electric field forming electrode 20 is made of a conductive material such as gold, platinum, copper, a conductive polymer, or carbon nanotubes. In the present embodiment, the first electrode field forming electrode 20 is made of gold. The first electric field forming electrode 20 shaped like a needle extends vertically. An electrode lead wire 21 is connected to a top end of the first electric field forming electrode 20. The first electric field forming electrode 20 is electrically connected to the voltage applying device 60 via the electrode lead wire 21.

The first electric field forming electrode 20 includes an accommodating area 22 and an outlet 23.

The biomolecule solution 10 such as a nucleic acid (e.g., probe DNA, RNA, PNA, an LNA), a protein (e.g., antigen and antibody), and an oligopeptide is accommodated in the accommodating area 22.

The outlet 23 is formed on the bottom end of the accommodating area 22, and is connected to the accommodating area 22. The inner diameter of the outlet 23 is very small, allowing the surface tension of the biomolecule solution 10 to suspend itself in the outlet 23. The biomolecule solution 10 accommodated inside the accommodating area 22 can be discharged from the accommodating area 22 via the outlet 23 by an EHD effect as described below. The area around the outlet 23 is hydrophobic-treated, and thus the contact angle of the biomolecule solution 10 is increased so that the contact angle of the biomolecule solution 10 with the surface is large enough to prevent the biomolecule solution 10 from flowing outwards.

The substrate 30 comprises a biochip or a microarray, and is made of silicon, glass, or polymer. In the present embodiment, the substrate 30 is made of silicon. The substrate 30 is disposed below the first electric field forming electrode 20, and a target surface 31 is formed on the substrate 30. The biomolecule solution 10 discharged via the outlet 23 of the first electric field forming electrode 20 is dropped and deposited on the target surface 31.

The printer body 40 is disposed above the outlet 23 of the first electric field forming electrode 20. The printer body 40 supports the first electric field forming electrode 20, and is made of polymethlymethacrylate (PMMA). The printer body 40 can be moved 3-dimensionally along x-, y-, and z-axes by a separate driving device (not shown). The first electric field forming electrode 20 supported by the printer body 40 can be moved to be disposed above the target surface 31 and separated from the target surface 31 by a predetermined distance by driving the separate driving device.

The second electric field forming electrode 50 is annular, is formed on the substrate 30, and encompasses the target surface 31. The second electric field forming electrode 50 is made of a conductive material such as gold, platinum, copper, a conductive polymer, or carbon nanotubes. In the present embodiment, the second electrode field forming electrode 50 is made of gold. The second electric field forming electrode 50 is separated from the first electric field forming electrode 20 and disposed below the first electric field forming electrode 20. The second electric field forming electrode 50 is disposed roughly perpendicular to a virtual central axis of the first electric field forming electrode 20. An electrode lead wire 51 made of a conductive material is connected to a top end of the second electric field forming electrode 50. The second electric field forming electrode 50 is electrically connected to the voltage applying device 60 via the electrode lead wire 51.

The voltage applying device 60 is electrically connected to the first and second electric field forming electrodes 20 and 50. The voltage applying device 60 can simultaneously apply AC and DC voltages to the first and second electric field forming electrodes 20 and 50 via the electrode lead wires 21 and 51, and an electric field is generated around the biomolecule solution 10 suspended in the outlet 23, as illustrated in FIG. 7, by applying AC and DC voltages to the first and second electric field forming electrodes 20 and 50. Due to the interaction between the generated electric field and a difference between the dielectric constant of the biomolecule solution 10 having a free surface and the surrounding atmosphere, an electric force acts inward on the biomolecule solution 10 from the surrounding, and thus, a predetermined amount of the biomolecule solution 10 is dropped onto the target surface 31 of the substrate 30.

Referring to FIG. 7, the electric field around the biomolecule solution 10 for a contact angle θ of 45 to 90° in the present embodiment is denser than a conventional electric field for a contact angle θ of 45 to 90° illustrated in FIG. 4 due to a nonuniform distribution of electric charges. Therefore, a greater electric force compared to a conventional electric force is applied to a droplet of the biomolecule solution 10 suspended in the outlet 23 than in the conventional art, and thus, the droplet dropped onto the substrate is smaller in size and volume than droplets in the conventional art.

The DC voltage is in the range of 500 to 10,000 V and the AC voltage is in the range of 500 to 10,000 V and has a frequency of 10 to 1,000 Hz, and the DC and AC voltages are simultaneously applied between the first and second electric field forming electrodes 20 and 50 by the voltage applying device 60. AC and DC voltages and a frequency that are outside of the ranges described above should not be used since an appropriate electric field will not be generated around the biomolecule solution 10, and thus the biomolecule solution 10 will not be effectively dropped onto the substrate 30. In the present embodiment, the DC voltage may be 1,550 V, the AC voltage may be 500 V, and the AC voltage may have a frequency of 100 Hz.

An example of a method of printing the biomolecule solution 10 with the device 100 for printing the biomolecule solution 10 onto the substrate 30 using the EHD effect will be described with reference to FIGS. 8 through 11.

First, the driving device is driven to move the printer body 40, which supports the first electric field forming electrode 20, above the target surface 31 of the substrate 30. Thereafter, the biomolecule solution 10 such as a nucleic acid (e.g., probe DNA, RNA, PNA, and LNA), a protein (e.g., antigen and antibody), and an oligopeptide is supplied to the accommodating area 22 of the first electric field forming electrode 20. The first electric field forming electrode 20 has the outlet 23 formed at the bottom end thereof. The inner diameter of the outlet 23 of the first electric field forming electrode 20 is very small, and thus the biomolecule solution 10 overcomes gravity and is suspended in the outlet 23 due to surface tension when an outside force is not applied.

After supplying the biomolecule solution 10 to the accommodating area 22 as described above, the voltage applying device 60 simultaneously applies the DC voltage in the range of 500 to 10,000 V and the AC voltage in the range of 500 to 10,000 V with a frequency of 10 to 1,000 Hz to the first and second electric field forming electrodes 20 and 50. As a result, an electric field as illustrated in FIG. 8 is formed around the biomolecule solution 10 that is suspended in the outlet 23.

When the electric field exists around the biomolecule solution 10 suspended in the outlet 23 due to surface tension stronger than gravity, curved electric potential lines are distributed around the biomolecule solution 10 with a contact angle and a radius of curvature as illustrated in FIG. 8. Due to the interaction between the electric field and the difference between the dielectric constants of the biomolecule solution 10 having a free surface and the surrounding atmosphere, the EHD force acts inward on the biomolecule solution 10. A stronger EHD force is applied to the upper portion of the droplet of the biomolecule solution 10, which is located near the interface between the droplet and the surface of the first electric field forming electrode 20, than to the lower portion of the droplet of the biomolecule solution 10, and thus, as illustrated in FIG. 8, the distribution of the EHD force is focused on the upper portion of the droplet. Thus, the shape of the droplet is changed as shown in FIG. 9.

Thereafter, the electric field distribution gradient becomes more steep around the droplet of the biomolecule solution 10, causing the upper portion of the droplet to have a groove as illustrated in FIG. 9. As a result, a stronger EHD force is focused on the grooved upper portion of the droplet of the biomolecule solution 10. The EHD force further changes the shape of the droplet, giving the upper portion of the droplet a neck shape as illustrated in FIG. 10. As the EHD force becomes more focused on the neck portion of the droplet, the droplet divides into two as illustrated in FIG. 11. Thus, the droplet suspended in the outlet 23 of the first electric field forming electrode 20 via surface tension drops onto the target surface 31 of the substrate 30.

In the present embodiment, the first electric field forming electrode 20 is shaped like a needle and extends in one direction. Accordingly, the electric charges supplied to the first electric field forming electrode 20 are nonuniformly distributed, and the electric field illustrated in FIG. 7 is generated between the first and second electric field forming electrodes 20 and 50. Referring to FIG. 7, the electric field around the biomolecule solution 10 for a contact angle θ of 45 to 90°in the present embodiment is denser than a conventional electric field for a contact angle θ of 45 to 90° illustrated in FIG. 4. Therefore, a greater electric force is applied to a droplet of the biomolecule solution 10 suspended in the outlet 23 than in the conventional art, and thus, the droplet dropped onto the substrate is smaller in size and volume than droplets in the conventional art.

When the substrate 30 includes a plurality of target surfaces 31, the biomolecule solution 10 is printed on each of the target surface 31. Since the droplets of the biomolecule solution 10 are so small, more biomolecule solution 10 can be printed on the substrate 30 than with the conventional printing device for the same sized substrate. Thus, a high density biochip can be easily manufactured.

In order to quantitatively confirm that the biomolecule solution 10 can be printed with drops smaller in size and volume than in the conventional art, the following experiment was conducted.

A biomolecule solution containing the hepatitis C virus (HCV) having an oligonucleotide sequence of 5'-GCC TGA TAG GGT GCT TGC GAAG T-3' was selected. The inner diameter of the first electric field forming electrode 20 was 210 or 110 µm. To compare the results with the conventional printing device, experiments were also conducted using a planar first electric field forming electrode 10 having a size of 22 mm X 22 mm X 15 mm (length X width X height), as illustrated in FIG. 2, with the inner diameter of an outlet 2 of a capillary 3 being 100 µm, and a circular first electrode field forming electrode 10 having a diameter of 4 mm with the inner diameter of the outlet 2 of the capillary 3 being 100 µm.

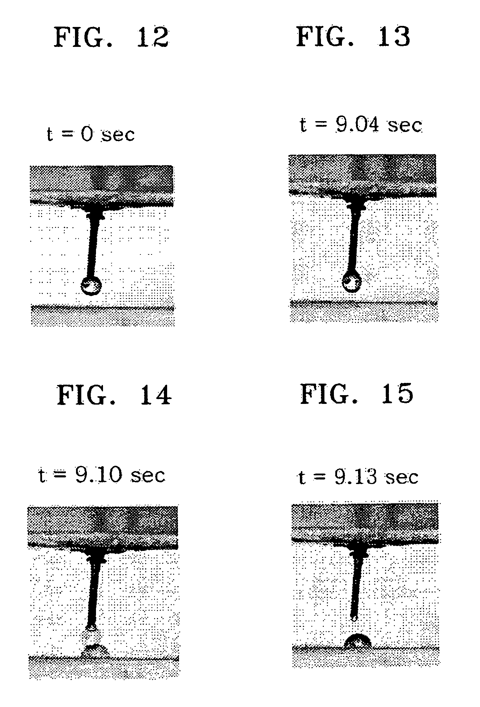

First, in the device 100 according to an embodiment of the present invention, the first and second electric field forming electrodes 20 and 50 were separated by 6.5 mm, then 1 nM of a DNA solution was supplied to a capillary at a rate of 10 µl/min. Thereafter, a DC voltage of 1,5000 V and AC voltage of 500 V with a frequency of 100 Hz were simultaneously applied between the first and second electric field forming electrodes 20 and 50. FIGS. 12 though 15 are photographs taken of the biomolecule solution 10 suspended from the outlet 23 over time.

Referring to FIGS. 12 through 15, when the biomolecule solution 10 was supplied to the accommodating area 22 of the first electric field forming electrode 20, the biomolecule solution 10 was suspended in the outlet 23 of the first electric field forming electrode 20, as illustrated in FIG. 12. FIG. 13 is a photograph illustrating the state of the biomolecule solution 10 suspended in the outlet 23 when 9.04 seconds passed after the AC and DC voltages were first applied from the current state. When 9.10 seconds passed after first applying the AC and DC voltages, the biomolecule solution 10 became neck-shaped, as illustrated in FIG. 14, and when 9.13 seconds past after first applying the AC and DC voltages, the droplet of the biomolecule solution 10 was printed onto the target surface 31 of the substrate 30.

The size and volume of the printed droplet of the biomolecule solution was measured and the results are shown in Table 1.

The same experiment was conducted using the conventional printing device and the results thereof are also shown in Table 1 to compare the results with those of the device 100 according to an embodiment of the present invention.

**Table 1**

| Type of Device | Size of Printed Droplet (µm) | Volume of Printed Droplet (µl) |
|---|---|---|
| Conventional Printing Device including Planar First Electric Field Forming Electrode | 970 | 238.94 |
| Conventional Printing Device including Circular First Electric Field Forming Electrode | 950 | 224.46 |
| Device of Present Invention (Diameter of Outlet = 210 µm) | 540 | 41.22 |
| Device of Present Invention (Diameter of Outlet = 110 µm) | 200 | 2.09 |

Referring to Table 1, the size and volume of the printed droplet were considerably reduced when printing the biomolecule solution using the device 100 according to an embodiment of the present embodiment compared with the printed droplet obtained using the conventional printing device.

In an embodiment of the present invention, the electrode lead wire 21, which is electrically connected to the first electric field forming electrode 20, is connected to the top end of the first electric field forming electrode 20. Thus, the electrode lead wire 21 does not affect the electric field generated between the first and second electric field forming electrodes 20 and 50. In addition, with this structure, it is easier to form a plurality of the first electric field forming electrodes 20.

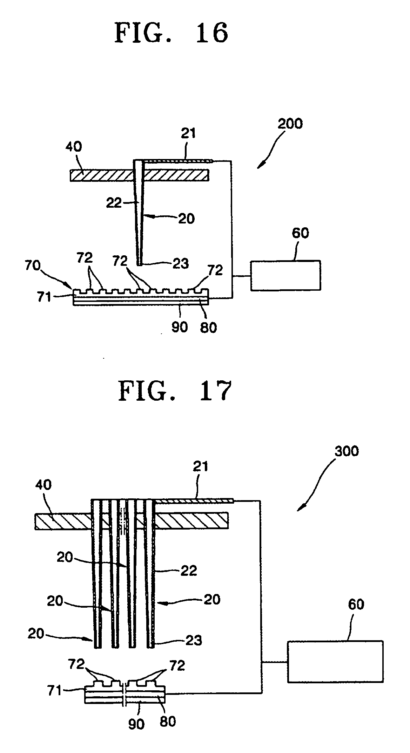

In an embodiment of the present invention, the surface of the substrate 30 is flat, only one target surface 31 is formed on the substrate 30, and a ring-shaped second electric field forming electrode 50 encompasses the target surface 31. However, in a device 200 for printing a biomolecule solution using an EHD effect according to another embodiment of the present invention, as illustrated in FIG. 16, a plurality of protrusions 72 may be formed on a substrate 70, and the protrusions 72 may be target surfaces. As illustrated in FIG. 16, the substrate 70 includes a planar layer 71 and the protrusions 72 protruding upwards from the planar layer 71. The protrusions 72 have the same pitch. Each of the protrusions 72 is a target surface 31 onto which a biomolecule solution is discharged via an outlet 23 of a first electric field forming electrode 20. A second electric field forming electrode 80 is disposed on the bottom surface of the substrate 70, and has the same shape as the bottom surface of the substrate 70. The second electric field forming electrode 80 is installed on a stage 90 that supports the substrate 70. The stage 90 may be moved by, for example, a conveyor belt.

In the device 200 constructed as above, a separate driving device (not shown) is driven to move a printer body 40 so that the first electric field forming electrode 20 is disposed directly above one of the protrusions 72 onto which the biomolecule solution is to be printed. Thereafter, AC and DC voltages are applied between the first and second electric field forming electrodes 20 and 80 to drop the biomolecule solution onto the protrusions 72 of the substrate 70. The driving device is again driven to move the printer body 40 to dispose the first electric field forming electrode 20 directly above another protrusion 72 to print the biomolecule solution by applying AC and DC voltages again to the first and second electric field forming electrodes 20 and 80. The biomolecule solution can be dropped and deposited on all of the protrusions 72 by repeatedly moving the printer body 40 as described above.

When a fragment of a target DNA to be analyzed is applied to a biochip or a DNA microarray manufactured by printing the biomolecule solution onto all of the protrusions 72 as described above, an experimenter may observe hybridization of the target DNA and the biomolecule solution formed on each of the protrusions 72 using, for example, an optical method or a radiochemical method, since the protrusions 72 are separated from one another by indents between the protrusions 72. As a result, the nucleotide sequences of the target DNA can be more accurately analyzed.

The device 200 illustrated in FIG. 16 includes only one first electric field forming electrode 20, which is 3-dimensionally moved by a separate driving device to print the biomolecule solution onto each of the protrusions 72. However, the device 200 can be constructed as illustrated in FIG. 17. Referring to FIG. 17, in a device 300 for printing a biomolecule solution onto a substrate 70 using an EHD effect, a plurality of first electric field forming electrodes 20 may be disposed to correspond to protrusions 72 of the substrate 70. The first electric field forming electrodes 20 have the same pitch as the protrusions 72 of the substrate 70, and the protrusions 72 correspond to each of the first electric field forming electrodes 20. The first electric field forming electrodes 20 are electrically connected to one another, and one of the first electric field forming electrodes 20 is electrically connected to a voltage applying device 60 via an electrode lead wire 21. Therefore, when the voltage applying device 60 is driven, voltage is applied to all of the first electric field forming electrodes 20.

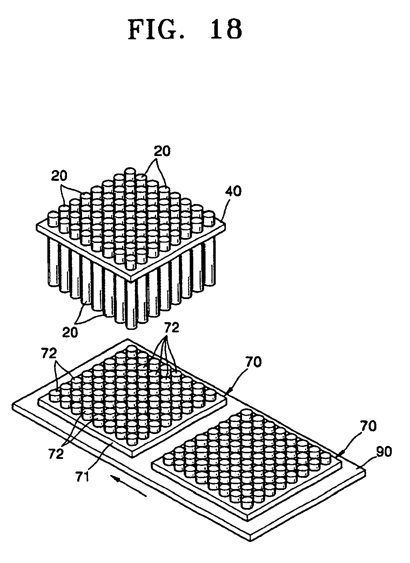

The device 300 constructed as above is especially useful when simultaneously printing different types of biomolecule solutions. FIG. 18 is a schematic perspective view illustrating printing of the biomolecule solution onto the substrate 70 using the device 300 illustrated in FIG. 17 to manufacture a plurality of silicon substrates (e.g., biochips or DNA microarrays) using the EHD effect. As illustrated in FIG. 18, when the printing of a biomolecule solution onto the substrate 70 is completed, the stage 90 supporting the substrate 70 automatically moves. As a result, the biomolecule solution can be continuously printed onto another substrate 70.

### Embodiment

After manufacturing a microarray using a device for printing a biomolecule solution onto a substrate using the EHD effect according to an embodiment of the present invention described above, pathogenic bacteria detection process was executed.

A list of sequences of capture probes of 5 types of pathogenic bacteria is provided in Table 2. Oligonucleotides that are specific to infectious respiratory diseases were designed and applied. The capture probes of the microarray were synthesized using common phosphoramidite synthesis (Bioneer, Korea), which increases hybridization efficiency, and the 5' end of each of the capture probes was labeled with NH₂C₆. To efficiently immobilize the capture probes, 20 µM of capture probes, 2.25 mM of polyethylene glycol, 6.35 mM of Na₂SO₄, and 50% of formamide were mixed. The capture probes were dispersed using an EHD method on a silicon-based microarray chip (Samsung Advanced Institute of Technology (SAIT), Korea) according to a process recommended by the supplier, and was treated with a prevention buffer solution (SAIT, Korea) to prevent non-specific combination.

**Table 2**

| Probe Name | Target Bacteria | Sequence | Tm | Length | GC (%) |
|---|---|---|---|---|---|
| H1-R2-1 | Hermophillus Influenza | 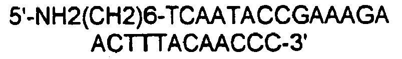 | 73 | 26 | 38 |
| KP-F2-1 | Klebsiella Pneumoniae | 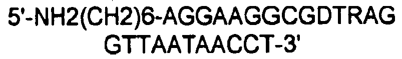 | 74 | 25 | 43 |
| MP-F1-4 | Mycoplasma Pneumoniae | 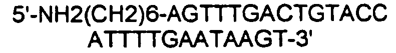 | 70 | 27 | 30 |
| SA-F1-2 | Staphylococus Aureus | 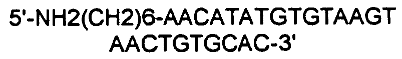 | 69 | 25 | 36 |
| SP-F2-3 | Streptococcus Pneumoniae | 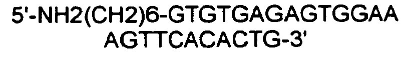 | 76 | 25 | 48 |

Thereafter, the capture probes were boiled for 5 minutes at a temperature of 95°C, and then bacteria genome DNAs (from a 0.9X10⁵ bacteria corresponding to the number of cells used in dissolving each of the bacteria cells) were prepared using a QIAamp DNA mini kit (Qiagen, Germany) according to a process recommended by the supplier.

Then, an Agilent Bioanalyzer was used for polymerase chain reaction (PCR) amplification to quantify the DNAs released from the dissolved cells. The following pair of primers was used for the PCR: primer A = 5'-Cy3-CCA KAC TCC TAC GGG AGG CW-3' and primer B = 5'-Cy3-GTA TTA CCG CRR CTG CTC GCA-3'. The pair of primers is complimentary to ends of each of the DNAs encoding 16S rRNA, thereby enabling amplification of the total coding region. The PCR amplification was performed using a Tag polymer (Solgent, Korea) for 30 cycles (pre-denaturization for 1 minute at 95°C, denaturization for 5 seconds at 95°C, annealing for 13 seconds at 60°C, extension for 15 seconds at 72°C and additional extension for 1 minute at 75°C). The amplified DNA was analysed with an Agilent 2100 Bioanalyzer (Agilent Technologies (Palo Algo, CA)) using a DNA 500 sizing reagent set on sale in the market. After the amplification, the resultant product was purified using a QlAquick PCR amplification kit (28106, Qiagen, Germany) according to the process recommended by the supplier.

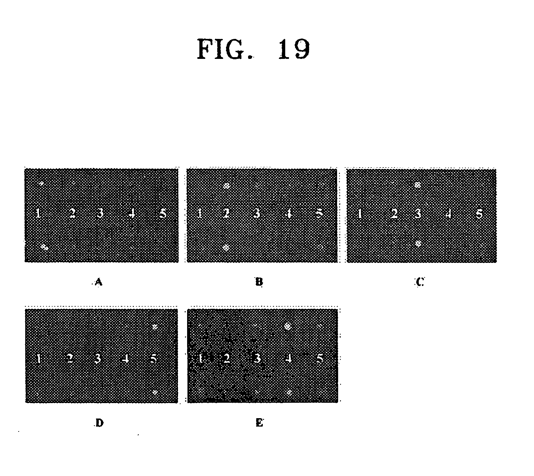

Thereafter, the Cy3-labled PCR product was mixed with 30 µl of a hybridization buffer (SAIT, Korea) and 60 µl of distilled water, and then denaturized by heating for 5 minutes at 95°C. 60 µl of denatured 10 nM PCR product was injected into a hybridization patch (SAIT, Korea) and hybridization was preformed for 1 hour at 42°C. After the hybridization, the microarray was washed with a washing buffer I (3X SSC) and then a buffer II (1X SSC) at room temperature for 5 minutes, and then air-dried thoroughly. The microarray was scanned with a GenePix^{™} 4000B array scanner (Axon Instruments, Poster City, CA) at 532 nm (600 PMT gain). Here, the Cy3-labled PCR product was used in the hybridization and the microarray was scanned, and two areas in one row of the microarray were respectively addressed with capture probes specific to one of the types of the pathogenic bacteria cells. 1 through 5 in FIG. 19 respectively indicate lanes 1 through 5. H1-R2-1, KP-F2-1, Mof1-4, SA-F1-2, and SP-F2-3 are respectively immobilized in the lanes 1 through 5. A through E in FIG. 19 respectively indicate microarrays in which *hermophillus influenza, klebsiella pneumoniae, mycoplasma pneumoniae, staphylococus aureus, streptococcus pneumoniae* were detected.

The following results were derived through the experiment described above.

To investigate the effect of a high electric field regarding the stability of DNA in a silicon-based chip using a single needle-shaped electrode dispersion component, 5 types of capture probes were manufactured using an EHD effect. After hybridizing and washing the capture probes, DNA spot definition was measured. FIG. 19 clearly shows that nucleotides of target bacteria were detected by the DNA microarray. This indicates that the DNAs were efficiently dispersed through the EHD effect without the stability of DNA when manufacturing the DNA microarray. In addition, after hybridization for 1 hour at 42°C, remarkable signal level (A through E in FIG. 19) of pathogenic bacteria cells is 10 times higher than noise level, when the cross hybridization was not performed. As a result, in the DNA microarray produced through rapid dispersion using the EHD effect, the detecting of pathogenic bacteria related to respiratory infections was successfully carried out.

While the present invention has been particularly shown and described with reference to exemplary embodiments thereof, it will be understood by those of ordinary skill in the art that various changes in form and details may be made therein without departing from the spirit and scope of the present invention as defined by the following claims.

For example, a printer body is included in the embodiments of the present invention described in the detailed description, but the printer body is not necessary.

In addition, AC and DC voltages are simultaneously applied between first and second electric field forming electrodes in the embodiments of the present invention, described in the detailed description, but only one of the AC and DC voltages may be applied between the first and second electric field forming electrodes.

## Claims

1. A device for printing a biomolecule solution onto a substrate using an electrohydrodynamic effect, the device comprising:
a first electric field forming electrode (20) that is shaped like a needle, is made of a conductive material, is disposed vertically, and comprises:
an accommodating area (22) in which the biomolecule solution is accommodated; and
an outlet (23) formed on a bottom end of the accommodating area through which the biomolecule solution is discharged;
a substrate (30) disposed below the first electric field forming electrode, and including a target surface (31) onto which the biomolecule solution discharged from the outlet of the first electric field forming electrode is deposited;
a second electric field forming electrode (50) made of a conductive material and disposed below the first electric field forming electrode; and
a voltage applying device (60) which is electrically connected to the first and second electric field forming electrodes to apply a voltage between the first and second electric field forming electrodes so that an electric field is generated around the biomolecule solution suspended in the outlet, wherein, due to the interaction between the electric field and a difference between dielectric constants of the biomolecule solution having a free surface and the surrounding atmosphere, the electric force acts inward on the biomolecule solution, thereby causing a predetermined amount of the biomolecule solution to drop onto the target surface of the substrate, **characterized in that**
the second electric field forming electrode (50) is a ring-shaped electrode disposed on top of the substrate and encompasses the circumference of the target surface of the substrate.

2. The device of claim 1, further comprising a printer body that is disposed above the outlet of the first electric field forming electrode, and supports the first electric field forming electrode.

3. The device of claim 1, wherein the first electric field forming electrode and the voltage applying device are electrically connected to each other via an electrode lead wire connected to a top end of the first electric field forming electrode.

4. The device of claim 1, wherein the voltage applying device simultaneously applies AC and DC voltages to generate the electric field around the biomolecule solution suspended in the outlet.

5. The device of claim 4, wherein the DC voltage in the range of 500 to 10,000 V and the AC voltage in the range of 500 to 10,000 V are simultaneously applied between the first and second electric field forming electrodes.

6. The device of claim 5, wherein the AC voltage having a frequency of 10 to 1,000 Hz is applied between the first and second electric field forming electrodes.

7. The device of claim 6, wherein the DC voltage of 1,550 V and the AC voltage of 500 V at a frequency of 100 Hz are applied.

8. The device of claim 1, wherein the substrate is made of silicon, glass, or polymer.

9. The device of claim 1, wherein the substrate comprises:
a planar layer; and
a plurality of protrusions protruding upwards from the planar layer,
wherein each of the protrusions is a target surface of the substrate.

10. The device of claim 1, wherein the second electric field forming electrode is disposed roughly perpendicular to the first electric field forming electrode.

11. The device of claim 1, wherein both the first and second electric field forming electrodes are made of gold.

12. The device of claim 1, wherein the area around the outlet is hydrophobic-treated.

13. The device of claim 1, comprising:
a plurality of the first electric field forming electrodes arranged with the same pitch, and a plurality of the target surfaces formed on the substrate,
wherein the target surfaces have the same pitch as the first electric field forming electrodes to respectively correspond to the first electric field forming electrodes.

## Patentansprüche

1. Vorrichtung zum Drucken einer Biomoleküllösung auf ein Substrat unter Ausnutzung eines eletrohydrodynamischen Effekts, wobei die Vorrichtung umfasst:
eine erste, ein elektrisches Feld erzeugende Elektrode (20), die wie eine Nadel geformt ist, die aus einem leitfähigen Material besteht, die vertikal ausgerichtet ist, und die umfasst:
einen Aufnahmebereich (22), in dem die Biomoleküllösung aufgenommen ist; und
einen Auslass (23), der an dem unteren Ende von dem Aufnahmebereich ausgebildet ist und durch den die Biomoleküllösung abgelassen wird;
einen Träger (30), der unter der ersten, ein elektrisches Feld erzeugenden Elektrode angeordnet ist, und der eine Zieloberfläche (31) umfasst, auf der die Biomoleküllösung, die aus dem Auslass von der ersten, ein elektrisches Feld erzeugenden Elektrode abgelassen wird, abgeladen wird;
eine zweite, ein elektrisches Feld erzeugende Elektrode (50), die aus einem leitfähigen Material besteht und die unter der ersten, ein elektrisches Feld erzeugenden Elektrode angeordnet ist; und
eine eine Spannung anlegende Vorrichtung (60), die elektrisch mit der ersten und der zweiten, ein elektrisches Feld erzeugenden Elektrode verbunden ist, um eine Spannung zwischen der ersten und der zweiten, ein elektrisches Feld erzeugenden Elektrode anzulegen, so dass ein elektrisches Feld um die Biomoleküllösung, die am Auslass hängt, erzeugt wird, wobei aufgrund der Wechselwirkungen zwischen dem elektrischen Feld und einer Differenz zwischen den Dielektrizitätskonstanten der Biomoleküllösung, die eine freie Oberfläche hat, und der umgebenden Atmosphäre, eine elektrische Kraft ins Innere der Biomoleküllösung gerichtet ist, was bewirkt, dass eine vorbestimmte Menge von der Biomoleküllösung auf die Zieloberfläche von dem Träger tropft, **dadurch gekennzeichnet, dass** die zweite, ein elektrisches Feld erzeugende Elektrode (50) eine ringförmige Elektrode ist, die oben auf dem Träger angeordnet ist und die den Umfang der Zieloberfläche des Trägers umschließt.

2. Vorrichtung gemäß Anspruch 1, die ferner einen Druckerkörper umfasst, der oberhalb des Auslasses von der ersten, ein elektrisches Feld erzeugenden Elektrode angeordnet ist und die erste, ein elektrisches Feld erzeugende Elektrode stützt.

3. Vorrichtung gemäß Anspruch 1, wobei die erste, ein elektrisches Feld erzeugende Elektrode und die eine Spannung anlegende Vorrichtung über eine Elektrodenleitung, die an einem oberen Ende von der ersten, ein elektrisches Feld erzeugenden Elektrode angeschlossen ist, elektrisch leitend miteinander verbunden sind.

4. Vorrichtung gemäß Anspruch 1, wobei die eine Spannung anlegende Vorrichtung gleichzeitig Gleich- und Wechselstromspannungen anlegt, um ein elektrisches Feld um die Biomoleküllösung, die an dem Auslass hängt, zu erzeugen.

5. Vorrichtung gemäß Anspruch 4, wobei die Gleichspannung im Bereich von 500 bis 10.000 V und die Wechselspannung im Bereich von 500 bis 10000 V gleichzeitig zwischen der ersten und der zweiten, ein elektrisches Feld erzeugende Elektrode angelegt werden.

6. Vorrichtung gemäß Anspruch 5, wobei Wechselspannung, die eine Frequenz von 10 bis 1000 Hz aufweist, zwischen der ersten und der zweiten, ein elektrisches Feld erzeugenden Elektrode angelegt ist.

7. Vorrichtung gemäß Anspruch 6, wobei eine Gleichspannung von 1550 V und eine Wechselspannung von 500 V bei einer Frequenz von 100 Hz angelegt wird.

8. Vorrichtung gemäß Anspruch 1, wobei der Träger aus Silikon, Glas oder einem Polymer besteht.

9. Vorrichtung gemäß Anspruch 1, wobei der Träger umfasst:
eine ebene Schicht; und
eine Vielzahl von Vorsprüngen, die nach oben aus der ebenen Schicht herausragen, wobei jeder der Vorsprünge eine Zieloberfläche von dem Träger ist.

10. Vorrichtung gemäß Anspruch 1, wobei die zweite, ein elektrisches Feld erzeugende Elektrode im Wesentlichen senkrecht zu der ersten, ein elektrisches Feld erzeugenden Elektrode ausgerichtet ist.

11. Vorrichtung gemäß Anspruch 1, wobei beide Elektroden, die erste und die zweite, ein elektrisches Feld erzeugende Elektroden, aus Gold bestehen.

12. Vorrichtung gemäß Anspruch 1, wobei der Bereich um den Auslass hydrophob behandelt ist.

13. Vorrichtung gemäß Anspruch 1, umfassend:
eine Vielzahl von ersten, ein elektrisches Feld erzeugenden Elektroden, die im gleichen Abstand zueinander ausgerichtet sind, und eine Vielzahl von Zieloberflächen, die auf dem Träger ausgebildet sind, wobei die Zieloberflächen den gleichen Abstand wie die ersten, ein elektrisches Feld erzeugenden Elektroden aufweisen und jeweils einer entsprechenden ersten, ein elektrisches Feld erzeugenden Elektrode zugeordnet sind.

## Revendications

1. Dispositif permettant d'imprimer une solution biomoléculaire sur un substrat en utilisant un effet électrohydrodynamique, le dispositif comprenant :
une première électrode (20) formant un champ électrique, qui prend la forme d'une aiguille, est constituée d'un matériau conducteur, est disposée verticalement et comprend :
une zone de réception (22) dans laquelle est contenue la solution biomoléculaire, et
un orifice de sortie (23) formé sur l'extrémité inférieure de la zone de réception au travers de laquelle est éjectée la solution biomoléculaire,
un substrat (30) placé en dessous de la première électrode formant un champ électrique et incluant une surface cible (31) sur laquelle est déposée la solution biomoléculaire, éjectée depuis l'orifice de sortie de la première électrode formant un champ électrique,
une seconde électrode (50) formant un champ électrique, constituée d'un matériau conducteur et placée en dessous de la première électrode formant un champ électrique, et
un dispositif (60) d'application de tension qui est relié électriquement aux première et seconde électrodes formant un champ électrique dans le but d'appliquer une tension entre les première et seconde électrodes formant un champ électrique de telle sorte qu'un champ électrique soit généré autour de la solution biomoléculaire en suspension dans l'orifice de sortie, dans lequel, en raison de l'interaction entre le champ électrique et de la différence entre les constantes diélectriques de la solution biomoléculaire, présentant une surface libre, et de l'atmosphère alentour, la force électrique agit vers l'intérieur sur la solution biomoléculaire, ce qui provoque ainsi la chute d'une quantité prédéfinie de la solution biomoléculaire sur la surface cible du substrat, **caractérisé en ce que** la seconde électrode (50) formant un champ électrique est une électrode en forme de bague placée au sommet du substrat, et elle englobe la circonférence de la surface cible du substrat.

2. Dispositif selon la revendication 1, comprenant en outre un corps formant dispositif d'impression qui est placé au-dessus de l'orifice de sortie de la première électrode formant un champ électrique et qui porte la première électrode formant un champ électrique.

3. Dispositif selon la revendication 1, dans lequel la première électrode formant un champ électrique et le dispositif d'application de tension sont reliés électriquement l'une à l'autre par l'intermédiaire d'un fil de sortie d'électrode relié à l'extrémité supérieure de la première électrode formant un champ électrique.

4. Dispositif selon la revendication 1, dans lequel le dispositif d'application de tension applique simultanément des tensions alternative et continue afin de générer le champ électrique autour de la solution biomoléculaire en suspension dans l'orifice de sortie.

5. Dispositif selon la revendication 4, dans lequel la tension continue, située dans la plage de 500 à 10 000 V, et la tension alternative, située dans la plage de 500 à 10 000 V, sont appliquées simultanément entre les première et seconde électrodes formant un champ électrique.

6. Dispositif selon la revendication 5, dans lequel la tension alternative, présentant une fréquence de 10 à 1000 Hz est appliquée entre les première et seconde électrodes formant un champ électrique.

7. Dispositif selon la revendication 6, dans lequel sont appliquées une tension continue de 1550 V et une tension alternative de 500 V à une fréquence de 100 Hz.

8. Dispositif selon la revendication 1, dans lequel le substrat est constitué de silicium, de verre ou d'un polymère.

9. Dispositif selon la revendication 1, dans lequel le substrat comprend :
une couche plane, et
une pluralité de protubérances faisant saillie vers le haut depuis la couche plane,
dans lequel chacune des protubérances représente une surface cible du substrat.

10. Dispositif selon la revendication 1 dans lequel la seconde électrode formant un champ électrique est à peu près disposée de manière perpendiculaire à la première électrode formant un champ électrique.

11. Dispositif selon la revendication 1, dans lequel les première et seconde électrodes formant un champ électrique sont toutes deux constituées d'or.

12. Dispositif selon la revendication 1, dans lequel la zone autour de l'orifice de sortie est traitée pour être hydrophobe.

13. Dispositif selon la revendication 1, comprenant :
une pluralité de premières électrodes formant un champ électrique disposées à un pas identique et une pluralité de surfaces cible formées sur le substrat,
dans lequel les surfaces cible présentent le même pas que les premières électrodes formant un champ électrique afin qu'elles correspondent respectivement aux premières électrodes formant un champ électrique.
